# EUROPÄISCHE PATENTANMELDUNG

(11) **EP 4 797 490 A1**
(43) Veröffentlichungstag der Anmeldung: **26.08.2026**
(21) Anmeldenummer: 25159017.0
(22) Anmeldetag: 20.02.2025
(51) Int. Cl.: H02J 7/00, H01M 10/44, H01M 10/48

(54) **LADEAUTOMAT FÜR AKKUMULATOREN**

(71) Anmelder: Hilti Aktiengesellschaft, 9494 Schaan (LI)
(72) Erfinder: Zöller, Ferdinand, 97082 Würzburg (DE); Schumm, Martin, 76185 Karlsruhe (DE); Walliser, Julius, 76137 Karlsruhe (DE); Tennig, Tim, 45472 Mülheim (DE); Wasserbäch, Melina, 76135 Karlsruhe (DE); Wiedner, Aaron, 86899 Landsberg (DE)
(74) Vertreter: Hilti Aktiengesellschaft Corporate Intellectual Property

(57) **Zusammenfassung**

Vorrichtung zum Aufbewahren und Versorgen von Akkumulatoren mit elektrischer Energie.

Die Vorrichtung enthält ein Gehäuse mit wenigstens einer Eingabe- und Ausgabeeinrichtung zur Eingabe wenigstens eines Akkumulators in die Vorrichtung oder zur Ausgabe wenigstens eines Akkumulators aus der Vorrichtung, eine Steuerungseinrichtung mit wenigstens einer Speichereinheit, eine Kommunikationseinrichtung zum Ein- und Ausgeben von Signalen, wenigstens eine Ladeeinrichtung mit wenigstens einer ersten und zweiten Ladeeinheit zum jeweiligen Versorgen eines Akkumulators mit elektrischer Energie, eine Antriebsvorrichtung zum wahlweisen und reversiblen Bewegen der wenigstens einen Ladeeinheit von wenigstens einer ersten Position zu einer zweiten Position, wobei die wenigstens eine Ladeeinheit in wenigstens einer Position an der Eingabe- und Ausgabeeinrichtung positionierbar ist und eine Energieversorgung wenigstens zur Versorgung des Antriebs sowie der Ladeeinrichtung mit elektrischer Energie.

Verfahren zum Steuern und Regeln einer Vorrichtung zum Aufbewahren und Versorgen einer Anzahl an Akkumulatoren, insbesondere als Energiespeicher für eine Werkzeugmaschine mit elektrischer Energie.

## Beschreibung

### Ladeautomat für Akkumulatoren

Die vorliegende Erfindung betrifft eine Vorrichtung zum Aufbewahren und Versorgen einer Anzahl an Akkumulatoren, insbesondere als Energiespeicher für eine Werkzeugmaschine mit elektrischer Energie.

Des Weiteren betrifft die vorliegende Erfindung ein Verfahren zum Steuern und Regeln einer Vorrichtung zum Aufbewahren und Versorgen einer Anzahl an Akkumulatoren, insbesondere als Energiespeicher für eine Werkzeugmaschine mit elektrischer Energie.

Auf dem Markt erhältliche Akku-Ladeeinrichtungen, insbesondere Ladeeinrichtungen zum Versorgen von Werkzeugmaschinen-Akkumulatoren mit elektrischer Energie, gemäß dem Stand der Technik sind für gewöhnlich mit einem Ladergehäuse ausgestaltet, an deren Oberseite sich eine Schnittstelle zum Verbinden mit einem Akkumulator befindet. Für den Fall, dass sich die Akku-Ladeeinrichtungen mit einem verbundenen Akkumulator in einem Außenbereich (d.h. nicht in einer Behausung) befindet, ist sowohl die Akku-Ladeeinrichtung als auch der Akkumulator unterschiedlichen Witterungsverhältnissen (z.B. Regen oder Sonneneinstrahlung) ausgesetzt. Diese Witterungsverhältnisse können zu Störungen beim Ladevorgang des Akkumulator oder sogar zu Beschädigungen an der Akku-Ladeeinrichtung und/oder an dem21 Akkumulator führen.

Es ist damit Aufgabe der vorliegenden Erfindung das vorstehend beschriebene Problem zu lösen.

Die Aufgabe wird gelöst durch den Gegenstand des unabhängigen Patentanspruchs 1 und 6. Weitere vorteilhafte Ausführungsformen des erfindungsgemäßen Gegenstands sind in den entsprechenden abhängigen Patentansprüchen enthalten.

Die Aufgabe wird dabei insbesondere gelöst durch eine Vorrichtung zum Aufbewahren und Versorgen einer Anzahl an Akkumulatoren, insbesondere als Energiespeicher für eine Werkzeugmaschine mit elektrischer Energie.

Erfindungsgemäß enthält die Vorrichtung ein Gehäuse mit wenigstens einer Eingabe- und Ausgabeeinrichtung zur Eingabe wenigstens eines Akkumulators in die Vorrichtung oder zur Ausgabe wenigstens eines Akkumulators aus der Vorrichtung, eine Steuerungseinrichtung mit wenigstens einer Speichereinheit, eine Kommunikationseinrichtung zum Ein- und Ausgeben von Signalen, wenigstens eine Ladeeinrichtung mit wenigstens einer ersten und zweiten Ladeeinheit zum jeweiligen Versorgen eines Akkumulators mit elektrischer Energie, eine Antriebsvorrichtung zum wahlweisen und reversiblen Bewegen der wenigstens einen Ladeeinheit von wenigstens einer ersten Position zu einer zweiten Position, wobei die wenigstens eine Ladeeinheit in wenigstens einer Position an der Eingabe- und Ausgabeeinrichtung positionierbar ist und eine Energieversorgung wenigstens zur Versorgung der Antriebsvorrichtung sowie der Ladeeinrichtung mit elektrischer Energie.

Die Eingabe- und Ausgabeeinrichtung kann dabei eine separate Eingabeeinheit und eine separate Ausgabeeinheit enthalten.

Gemäß einer weiteren vorteilhaften Ausführungsform kann es möglich sein, dass die Eingabeeinrichtung eine Verriegelungseinrichtung zum wahlweisen Verriegeln der Eingabeeinrichtung enthält.

Die Ladeeinrichtung kann dabei als drahtlose, kontaktlose oder kabellose Energieübertragungseinrichtung, beispielsweise als Induktionsladeeinrichtung, ausgestaltet sein. Des Weiteren kann die Energieübertragung auf dem Prinzip eines Resonanztransformators basieren.

Gemäß einer weiteren vorteilhaften Ausführungsform kann es möglich sein, dass wenigstens ein Sensor zum Erfassen wenigstens eines Kennwertes des wenigstens einen Akkumulators enthalten ist.

Entsprechend einer weiteren vorteilhaften Ausführungsform kann es möglich sein, dass eine Temperaturregeleinrichtung mit wenigstens einem Temperatursensor, wenigstens einer Heizung und wenigstens einer Kühleinheit enthalten ist.

Gemäß einer weiteren vorteilhaften Ausführungsform kann es möglich sein, dass wenigstens ein Aufbewahrungsbehälter zum Aufnehmen und Halten wenigstens eines Akkumulators und eine Greifeinrichtung zum Einführen des wenigstens einen Akkumulators in den wenigstens einen Aufbewahrungsbehälter enthalten ist.

Entsprechend einer weiteren vorteilhaften Ausführungsform kann es möglich sein, dass der wenigstens eine Aufbewahrungsbehälter eine Löscheinrichtung enthält.

Gemäß einer weiteren vorteilhaften Ausführungsform kann es möglich sein, dass die Eingabe- und Ausgabeeinrichtung wenigstens eine Verschlusseinrichtung zum wahlweisen Verriegeln der Eingabe- und Ausgabeeinrichtung enthält.

Entsprechend einer weiteren vorteilhaften Ausführungsform kann es möglich sein, dass die Verriegelungseinrichtung eine Signaleingabeeinheit zum reversiblen Einstellen der Verriegelungseinrichtung in einen verriegelten oder entriegelten Zustand enthält.

Darüber hinaus wird die Aufgabe gelöst durch ein Verfahren zum Steuern und Regeln einer Vorrichtung zum Aufbewahren und Versorgen einer Anzahl an Akkumulatoren, insbesondere als Energiespeicher für eine Werkzeugmaschine mit elektrischer Energie.

Erfindungsgemäß sind die folgenden Verfahrensschritte enthält:
- Verbinden wenigstens eines Akkumulators mit einer Ladeeinrichtung in einer ersten Position;
- Erfassen wenigstens eines Kennwertes des wenigstens einen Akkumulators durch wenigstens einen Sensor;
- Versorgen des wenigstens einen Akkumulators durch die Ladeeinrichtung mit elektrischer Energie in Abhängigkeit wenigstens eines ersten erfassten Kennwertes; und
- Bewegen des Akkumulators von der ersten Position in ersten Position in eine zweite Position in Abhängigkeit wenigstens eines zweiten erfassten Kennwertes.

Bei dem Kennwert kann es sich um den Ladezustand (oder auch Ladekapazität oder Ladung), SoC (State of Charge) oder SoH (State of Health) eines Akkumulators handeln.

Gemäß einer vorteilhaften Ausführungsform können die zusätzlichen Verfahrensschritte enthalten sein:
- Einführen eines Akkumulators in den wenigstens einen Aufbewahrungsbehälter, wenn wenigstens ein erfasster Kennwert einem vorbestimmten Schwellwert entspricht oder übersteigt.

Entsprechend einer weiteren vorteilhaften Ausführungsform kann der zusätzliche Verfahrensschritt enthalten sein:
- Ausgeben des wenigstens einen Akkumulators aus der Vorrichtung durch die Eingabe- und Ausgabeeinrichtung, wenn wenigstens ein vorbestimmtes Signal zur Ausgabe des wenigstens einen Akkumulators von der Kommunikationseinrichtung empfangen worden ist.

Gemäß einer weiteren vorteilhaften Ausführungsform können die zusätzlichen Verfahrensschritte enthalten sein:
- Aussenden wenigstens eines Signals durch die Kommunikationseinrichtung, wenn der wenigstens eine erfasste Kennwert des wenigstens einen Akkumulators nicht wenigstens einem in einer Speichereinheit der Vorrichtung hinterlegten Wert entspricht.

Entsprechend einer weiteren vorteilhaften Ausführungsform können die zusätzlichen Verfahrensschritte enthalten sein:
- Ausgeben des wenigstens einen Akkumulators aus der Vorrichtung durch die Eingabe- und Ausgabeeinrichtung, wenn der wenigstens eine erfasste Kennwert nicht wenigstens einem in einer Speichereinheit der Vorrichtung hinterlegten Wert entspricht.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine Seitenansicht auf eine erfindungsgemäße Vorrichtung gemäß einer ersten beispielhaften Ausführungsform;
- Figur 2: eine Seitenansicht auf eine erfindungsgemäße Vorrichtung gemäß einer zweiten beispielhaften Ausführungsform in einem ersten Zustand;
- Figur 3: eine Seitenansicht auf die erfindungsgemäße Vorrichtung gemäß der zweiten beispielhaften Ausführungsform in einem zweiten Zustand;
- Figur 4: eine Seitenansicht auf die erfindungsgemäße Vorrichtung gemäß der zweiten beispielhaften Ausführungsform in einem dritten Zustand;
- Figur 5: eine Seitenansicht auf die erfindungsgemäße Vorrichtung gemäß einer dritten beispielhaften Ausführungsform; und
- Figur 6: eine Seitenansicht auf die erfindungsgemäße Vorrichtung gemäß einer vierten beispielhaften Ausführungsform.

### Ausführungsbeispiele:

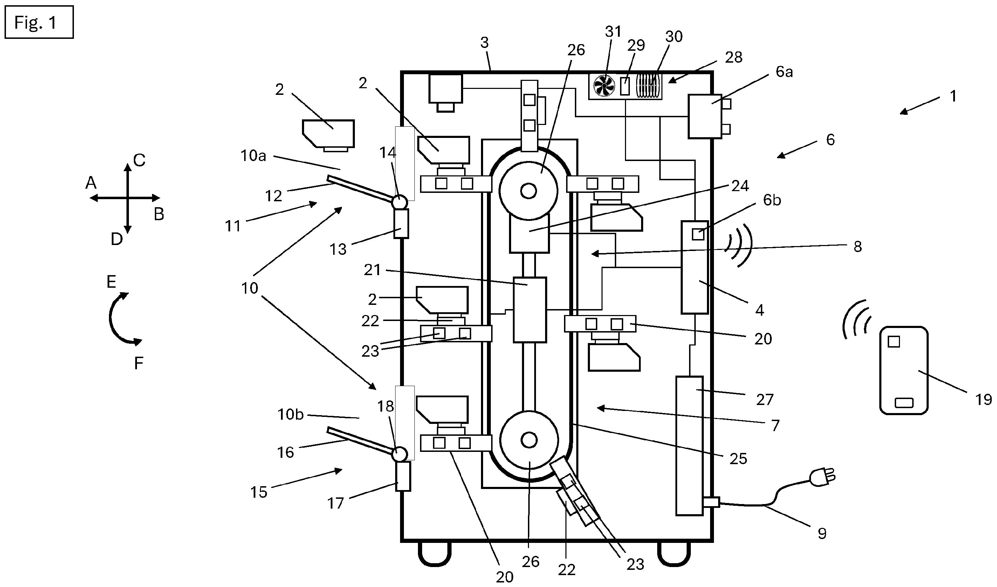

In Figur 1 ist eine Vorrichtung 1 gemäß einer ersten beispielhaften Ausführungsform zum Aufbewahren und Versorgen einer Anzahl an Akkumulatoren 2, insbesondere als Energiespeicher für eine Werkzeugmaschine, mit elektrischer Energie gezeigt.

Die Vorrichtung enthält ein Gehäuse 3 mit einer Eingabe- und Ausgabeeinrichtung 10, eine Steuerungseinrichtung 4, eine Speichereinheit 5, eine Kommunikationseinrichtung 6, eine Ladeeinrichtung 7, eine Antriebsvorrichtung 8 sowie eine Energieversorgung 9.

Die Steuerungseinrichtung 4 dient zum Steuern und Regeln der unterschiedlichen Funktionen der gesamten Vorrichtung 1 sowie einzelner Baugruppen und Komponenten. Die Steuerungseinrichtung 4 steuert und regelt insbesondere die Funktionen der Ladeeinrichtung 7. Wie nachfolgend noch im Detail beschrieben gehört zu den Funktionen der Ladeeinrichtung 7 das Steuern und Regeln einer Ladespannung bzw. einer Ladeleistung, wenn ein Akkumulator 2 zum Versorgen mit elektrischer Energie mit der Ladeeinrichtung 7 verbunden ist.

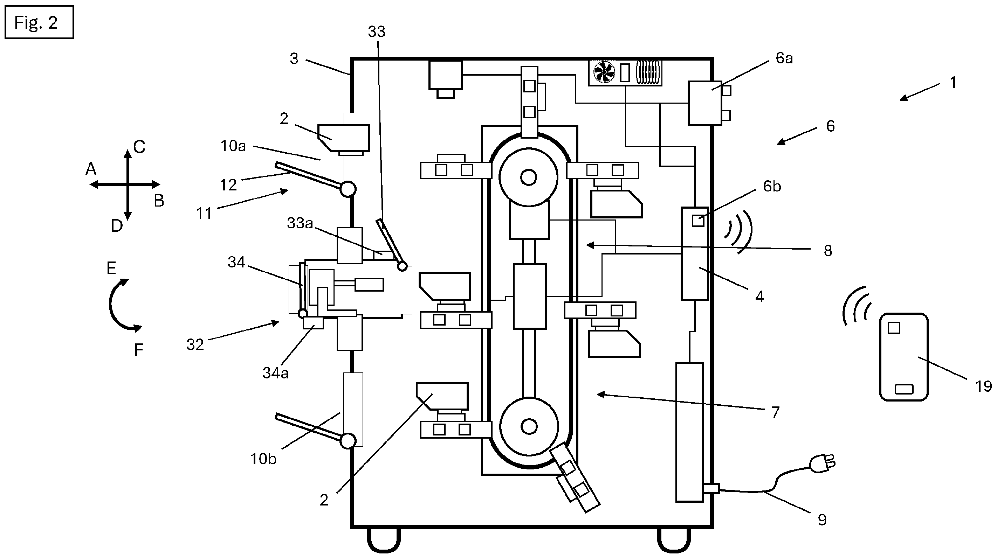

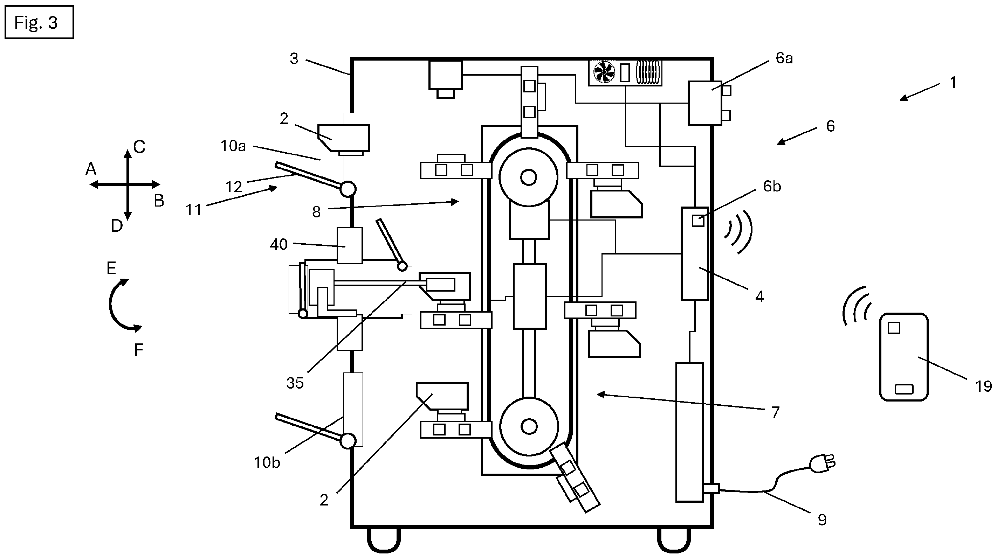

Die Eingabe- und Ausgabeeinrichtung 10 enthält gemäß einer Ausführungsform eine separate Eingabeeinheit 10a und eine separate Ausgabeeinheit 10b, vgl. Figur 1 bis 4. Die Eingabeeinheit 10a dient zum Eingeben oder Einführen eines Akkumulators 2 in das Innere des Gehäuses 3 der Vorrichtung 1.

Es ist dabei möglich, dass mehr als eine Eingabeeinheit 10a und mehr als eine Ausgabeeinheit 10b an der Vorrichtung 1 vorhanden ist. Es können dabei mehrere Ausgabeeinheiten 10b in unterschiedlichen Größen an der Vorrichtung 1 enthalten sein. Die Größe einer Ausgabeeinheit kann dabei an die Größe bzw. das Volumen eines Akkumulators 2 angepasst sein.

Des Weiteren enthält die Eingabeeinheit 10a eine Verschlusseinrichtung 11 mit einer Klappe 12. Die Klappe 12 ist mittels eines Antriebs 13 um ein Scharnier 14 in Drehrichtung E oder F schwenkbar gelagert. Der Antrieb 13 der Eingabeeinheit 10a ist zum Steuern mit der Steuerungseinrichtung 4 verbunden. Ein entsprechendes Signal wird von der Steuerungseinrichtung 4 an den Antrieb 13 der Eingabeeinheit 10a gesendet, sodass die Klappe 12 entweder geöffnet oder geschlossen wird.

Die Ausgabeeinheit 10b dient zum Ausgeben oder Ausführen eines Akkumulators 2 aus der Vorrichtung 1. Des Weiteren enthält die Ausgabeeinheit 10b eine Verschlusseinrichtung 15 mit einer Klappe 16. Die Klappe 16 ist mittels eines Antriebs 17 um ein Scharnier 18 in Drehrichtung E oder F schwenkbar gelagert. Der Antrieb 17 der Ausgabeeinheit 10b ist zum Steuern mit der Steuerungseinrichtung 4 verbunden. Ein entsprechendes Signal wird von der Steuerungseinrichtung 4 an den Antrieb 17 der Ausgabeeinheit 10b gesendet, sodass die Klappe 16 entweder geöffnet oder geschlossen wird.

Die Kommunikationseinrichtung 6 dient zum Ein- und Ausgeben von Signalen.

In dem vorliegenden Ausführungsbeispiel enthält die Kommunikationseinrichtung 6 eine Eingabeeinrichtung 6a (auch Man-Machine-Interface (MMI) genannt) und eine Funkverbindungseinrichtung 6b.

Die Eingabeeinrichtung 6a ist an einer ersten Seitenwand 3a positioniert und weist einen Bildschirm (auch Display genannt) und eine Anzahl an Schaltern auf. Die Funkverbindungseinrichtung 6b ist als Bluetooth-Modul ausgestaltet, sodass Daten und Informationen zwischen der Vorrichtung 1 und einer externen Einrichtung 19 ausgetauscht werden können. In den Figuren ist eine externe Einrichtung 19 beispielhaft als Smartphone dargestellt. Alternativ ist die Funkverbindungseinrichtung 6b als WiFi-Modul oder als eigenständiges GSM/LTE/(2/2.5/3G/4G/5G (LTE)-Modul ausgestaltet.

Die Ladeeinrichtung 7 dient zum Versorgen der Akkumulatoren 2 mit elektrischer Energie. Gemäß dem ersten Ausführungsbeispiel in Figur 1 enthält die Ladeeinrichtung 7 sieben Ladeeinheiten 20 sowie einen Gleichspannungswandler 21. Eine Ladeeinheit 20 enthält dabei eine Ladeschnittstelle 22 zum mechanischen, elektrischen und kommunikativen Verbinden der Ladeeinheit 20 mit einem Akkumulator 2. Über die jeweilige Ladeschnittstelle 22 gelangt elektrische Energie zu einem mit einer Ladeeinheit 20 verbundenen Akkumulator 2. Jede Ladeeinheit 20 ist hierzu mit der Energieversorgung 9 verbunden.

Darüber hinaus enthält jede Ladeeinheit 20 eine Anzahl an Sensoren 23. Mit Hilfe der Sensoren 23 kann die Ladeeinheit 20 unterschiedliche Kennwerte eines mit einer Ladeeinheit verbundenen Akkumulator 2 erfassen. Zu den Kennwerten gehören unter anderem ein Spannungswert oder Ladezustand (d.h. SoC in %) eines Akkumulators 2. Jede Ladeeinheit 20 ist über entsprechende Leitungen mit der Steuerungseinrichtung 4 zum Senden und Empfangen von Daten und Informationen verbunden. Mit Hilfe der Sensoren 23 kann auch die Art, der Typ oder eine andere charakteristische Eigenschaft eines Akkumulators 2 erfasst und an die Steuerungseinrichtung 4 gesendet werden. Mit Hilfe dieser Werte oder Daten kann eine Akkumulator 4 identifiziert werden.

Die Antriebsvorrichtung 8 enthält unter anderem einen Antrieb 24 sowie ein Förderband 25. Alternativ kann anstelle des Förderbands 25 auch eine Kette enthalten sein.

Wie in den Figuren angedeutet, läuft das Förderband 25 über zwei Räder 26. Der Antrieb 24 treibt ein Rad 26 an. Das Rad 26 treibt wiederum das Förderband 25 an. Dadurch, dass der Antrieb 24 mit der Steuerungseinrichtung 4 verbunden ist, kann die Richtung (E oder F) sowie die Geschwindigkeit des Förderbands 25 gesteuert und geregelt werden. Des Weiteren kann über die Steuerungseinrichtung 4 auch eine Position gewählt, an dem das Förderband 25 anhält bzw. zum Stehen kommt. Die Steuerungseinrichtung 4 kann beispielsweise das Förderband 25 so stoppen, dass eine bestimmte Ladeeinheit 20 an der Eingabeeinheit 10a oder an der Ausgabeeinheit 10b anhält. Wie ebenfalls in den Figuren angedeutet, sind die Ladeeinheiten 20 mit dem Förderband verbunden.

Die Energieversorgung 9 ist gemäß dem vorliegenden Ausführungsbeispiel als Stromkabel zum wiederlösbaren Verbinden mit einer Netzstromquelle (Steckdose) ausgestaltet. Die Energieversorgung 9 enthält einen Gleichrichter 27 und dient zur Versorgung des Antriebs 24 sowie der Ladeeinrichtung 7 mit elektrischer Energie. Alternativ oder zusätzlich kann die Energieversorgung 9 auch durch einen separaten Akkumulator, eine Photovoltaik, ein Windrad, eine Brennstoffzelle oder dergleichen zum Bereitstellen von elektrischer Energie ausgestaltet sein.

Wie in den Figuren angedeutet, ist im Gehäuse 3 der Vorrichtung 1 eine Temperaturregeleinrichtung 28 positioniert. Die Temperaturregeleinrichtung 28 dient zum Erfassen von Temperaturwerten sowie zum wahlweisen Kühlen oder Heizen der Vorrichtung 1 und vor allem der Ladeeinrichtung 7. Die Temperaturregeleinrichtung 28 enthält dabei im Wesentlichen einen Temperatursensor 29, eine Heizung 30 und einen Lüfter 31.

Der Temperatursensor 29, die Heizung 30 und der Lüfter 31 sind über Leitungen so mit der Steuerungseinrichtung 4 verbunden, dass von dem Temperatursensor 29 erfasste Temperaturwerte an die Steuerungseinrichtung 4 gesendet werden können. Wenn ein erfasster Temperaturwert einem bestimmten in der Speichereinheit 5 hinterlegten Schwellwert entspricht., wird die Heizung 30 und/oder der Lüfter 31 aktiviert oder deaktiviert.

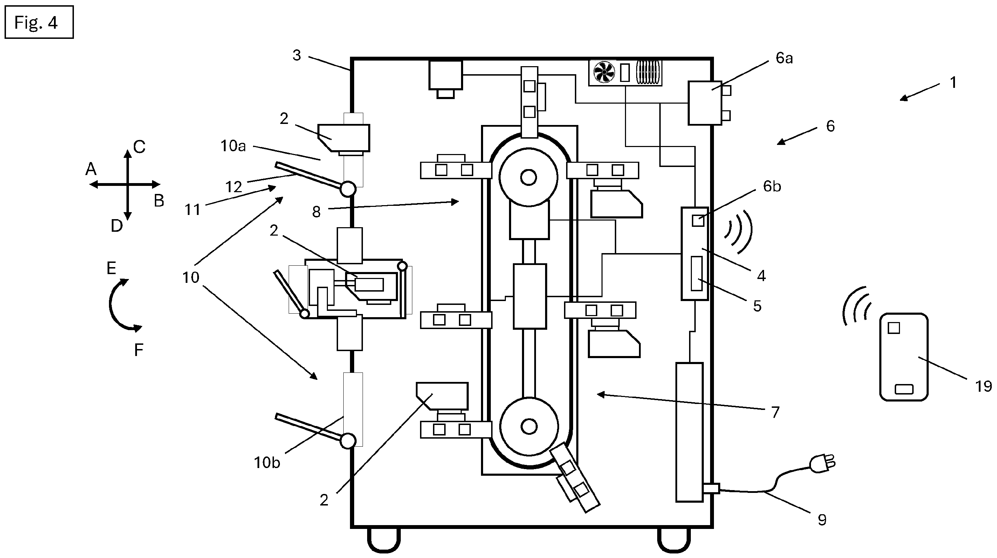

Gemäß einer alternativen Ausführungsform enthält die Vorrichtung 1 ein Aufbewahrungsbehälter 32 zum Aufnehmen und Halten eines Akkumulators 2, vgl. Figur 4. Der Aufbewahrungsbehälter 32 dient zum kontrollierten Aufbewahren eines Akkumulators 2, der aus der Ladeeinrichtung 7 herausgenommen wurde. Ein Akkumulator 2 kann in den Aufbewahrungsbehälter 32 eingeführt und dort aufbewahrt werden, wenn wenigstens ein Kennwert eines Akkumulators 2 einem vorbestimmten Schwellwert entspricht oder übersteigt. Bei einem Kennwert des Akkumulators 2 kann es sich um einen Temperaturwert handeln.

Der Aufbewahrungsbehälter 32 enthält eine erste Klappe 33 zum wahlweisen Verschließen eines Zugangs sowie eine zweite Klappe 34 zum wahlweisen Verschließen eines Ausgangs. Wie in Figur 4 angedeutet, ist der Aufbewahrungsbehälter 32 so an dem Gehäuse 3 der Vorrichtung 1 angeordnet, dass der Zugang zu dem Aufbewahrungsbehälter 32 zum Inneren des Gehäuses 3 weist. Der Ausgang öffnet den Aufbewahrungsbehälter 32 nach außen bzw. außerhalb des Gehäuses 3 der Vorrichtung 1. Die erste und zweite Klappe 33, 34 ist jeweils mit einem Antrieb 33a, 34a verbunden, sodass die Klappen 33, 34 individuell von dem Antrieb 33a, 34a in eine geöffnete oder geschlossene Position gebracht werden können. Der Antrieb 33a, 34a ist über Leitungen mit der Steuerungseinrichtung 4 verbunden, sodass die Steuerungseinrichtung 4 die Position der jeweiligen Klappen 33, 34 steuern kann. Über die Kommunikationseinrichtung 6 kann ein entsprechender Befehl bzw. ein entsprechendes Signal zum Ansteuern des Aufbewahrungsbehälters 32 bzw. der Klappen 33, 34 ausgesendet werden.

Der Aufbewahrungsbehälter 32 enthält des Weiteren eine Greifeinrichtung 35 zum Einführen eines Akkumulators 2 in das Innere des Aufbewahrungsbehälters 32 enthalten ist. Die Greifeinrichtung 35 wird entsprechend durch den Antrieb 33a, 34a angetrieben, der auch die Klappen 33, 34 des Aufbewahrungsbehälters 32 antreibt. Alternativ kann die Greifeinrichtung 35 aber auch einen eigenständigen Antrieb aufweisen.

Die Greifeinrichtung 35 ist auch dazu ausgestaltet einen Akkumulator 2 entweder durch den Zugang oder durch den Ausgang aus dem Aufbewahrungsbehälter 32 auszuwerfen. Des Weiteren ist die Greifeinrichtung 35 auch dazu ausgestaltet, einen Akkumulator 2, der von außerhalb der Vorrichtung 1 in den Aufbewahrungsbehälter 32 eingelegt wurde, nach Empfangen eines entsprechenden Signals von der Kommunikationseinrichtung 6 auf eine freie Ladeeinheit 20 zu positionieren. Die Funktion bzw. die Position des Antriebs 24 der Greifeinrichtung 35, der Klappen der Greifeinrichtung 35 und der Antriebsvorrichtung 8 der Ladeeinrichtung 7 werden von der Steuerungseinrichtung 4 für ein entsprechendes Zusammenspiel gesteuert.

Alternativ oder zusätzlich enthält der Aufbewahrungsbehälter 32 eine Löscheinrichtung 40. Gemäß einer beispielhaften Ausführungsform enthält die Löscheinrichtung 40 eine CO₂-Kapsel, deren Aktivierung über die Steuerungseinrichtung 4 gesteuert wird.

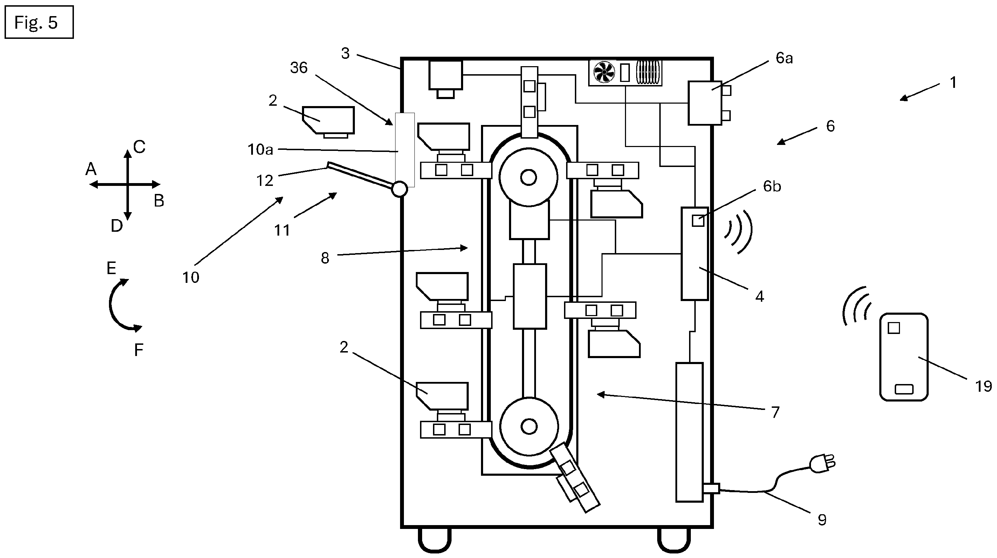

Entsprechend einer alternativen Ausführungsform der Vorrichtung 1 enthält die Eingabe- und Ausgabeeinrichtung 10 lediglich eine einzelne Aussparung 36 an dem Gehäuse 3 der Vorrichtung 1, vgl. Figur 5. Die Aussparung 36 enthält eine Verschlusseinrichtung 36a zum wahlweisen Verriegeln der Aussparung 36 in Form einer schwenkbaren Klappe.

Gemäß einer weiteren alternativen Ausführungsform der Vorrichtung 1 enthält die Eingabe- und Ausgabeeinrichtung 10 eine erste, zweite und dritte Aussparung 37a, 37b, 37c an dem Gehäuse 3 der Vorrichtung 1. Jede Aussparung 37a, 37b, 37c enthält eine erste, zweite und dritte Verschlusseinrichtung 38a, 38b, 38c zum wahlweisen Verriegeln der jeweiligen Aussparung 37a, 37b, 37c in Form einer schwenkbaren Klappe.

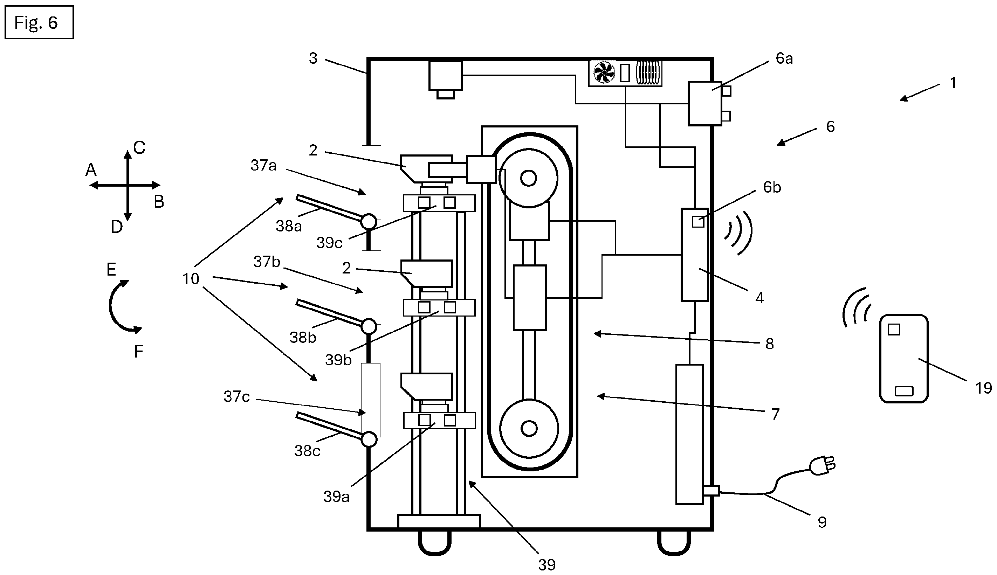

In Figur 6 ist eine weitere alternative Ausführungsform der Vorrichtung 1 dargestellt. In dieser Ausführungsform enthält die Vorrichtung 1 eine Aufbewahrungseinheit 39 in Form eines Regals mit einem ersten, zweiten und dritten Fach 39a, 39b, 39c. Es können mehr oder weniger als drei Fächer vorhanden sein. Jedes Fach 39a, 39b, 39c weist eine Schnittstelle zum wiederlösbaren Verbinden eines Akkumulators 2 mit der Aufbewahrungseinheit 39. Die Ladeeinrichtung 7 enthält lediglich eine Ladeeinheit 20, die mit einem Förderband 25 einer Antriebsvorrichtung 8 verbunden ist. Die Ladeeinheit 20 enthält einen Induktionslader zum induktiven Laden von induktionsladefähigen Akkumulatoren 2. Dadurch, dass die Ladeeinheit 20 durch die Antriebsvorrichtung 8 in Pfeilrichtung C oder D reversibel bewegbar ist, kann die Ladeeinheit 20 zum induktiven Laden an einem Akkumulator 2 positioniert werden.

Zur Durchführung des Verfahrens für eine Vorrichtung 1 gemäß einer ersten Ausführungsform wird zunächst von einem Anwender über die Kommunikationseinrichtung 6 ein entsprechendes Signal an die Verschlusseinrichtung 11 der Eingabeeinheit 10a sowie an die Antriebsvorrichtung 8 gesendet. Der Anwender ist nicht in den Figuren gezeigt.

Die Klappe 12 der Eingabeeinheit 10a wird nach Erhalten des Signals geöffnet. Die Antriebsvorrichtung 8 bewegt nach Erhalten des Signals eine Ladeeinheit 20 auf Höhe der Eingabeeinheit 10a, sodass ein Anwender einen Akkumulator 2 an eine Ladeeinheit 20 positionieren kann. Die Ladeeinheit 20 erfasst die Anwesenheit des Akkumulators 2 und sendet ein entsprechendes Signal über die Steuerungseinrichtung 4 an die Verschlusseinrichtung 11 der Eingabeeinheit 10a. Die Klappe 12 der Eingabeeinheit 10a wird nach Erhalten des Signals geschlossen.

Die Sensoren 23 der Ladeeinheit 20, die mit dem Akkumulator 2 verbunden wurde, erfassen unterschiedliche Kennwerte des Akkumulators 2. Zu den Kennwerten gehört unter anderem der Ladezustand (SoC = State of Charge in %) des Akkumulators sowie eindeutige Identifikationsdaten für einen ordnungsgemäßen Ladevorgang (d.h. Versorgung des Akkumulators 2 mit einer bestimmungsgemäßen Ladespannung bzw. Ladeleistung). Die erfassten Daten und Kennwerte des Akkumulators 2 werden an die Steuerungseinrichtung 4 gesendet und mit hinterlegten Werten bzw. Schwellwerten verglichen bzw. abgeglichen. Die Steuerungseinrichtung 4 regelt abhängig von den erfassten Werten die Ladeleistung zum Laden des Akkumulators 2.

Durch ein entsprechendes Signal von der Steuerungseinrichtung 4 wird die Klappe 12 der Eingabeeinheit 10a wieder geschlossen. Alternativ schließt sich die Klappe der Eingabeeinheit 10a nach einer gewissen Zeitdauer. Die Zeitdauer kann dabei zwei Minuten betragen.

Nach dem Eingeben eines entsprechenden Signals an der Kommunikationseinrichtung 6 wird die Klappe der Ausgabeeinheit 10b geöffnet. Die Steuerungseinrichtung 4 bewegt die Antriebsvorrichtung 8, sodass eine Ladeeinheit 20 mit einem bestimmten Akkumulator 2 auf Höhe der Ausgabeeinheit 10b positioniert ist. Der hinter der Ausgabeeinheit 10b positionierte Akkumulator 2 kann von einem Anwender von der Ladeeinheit 20 und aus der Vorrichtung 1 entnommen werden.

### Bezugszeichen

- 1: Vorrichtung
- 2: Akkumulator
- 3: Gehäuse der Werkzeugmaschine
- 4: Steuerungseinrichtung
- 5: Speichereinheit
- 6: Kommunikationseinrichtung
- 6a: Eingabeeinrichtung der Kommunikationseinrichtung
- 6b: Funkverbindungseinrichtung der Kommunikationseinrichtung
- 7: Ladeeinrichtung
- 8: Antriebsvorrichtung
- 9: Energieversorgung
- 10: Eingabe- und Ausgabeeinrichtung
- 10a: Eingabeeinheit
- 10b: Ausgabeeinheit
- 11: Verschlusseinrichtung der Eingabeeinheit
- 12: Klappe der Eingabeeinheit
- 13: Antrieb der Eingabeeinheit
- 14: Scharnier der Eingabeeinheit
- 15: Verschlusseinrichtung der Ausgabeeinheit
- 16: Klappe der Ausgabeeinheit
- 17: Antrieb der Ausgabeeinheit
- 18: Scharnier der Ausgabeeinheit
- 19: exteme Einrichtung
- 20: Ladeeinheit
- 21: Gleichspannungswandler
- 22: Ladeschnittstelle der Ladeeinheit
- 23: Sensoren der Ladeeinheit
- 24: Antrieb der Antriebsvorrichtung
- 25: Förderband der Antriebsvorrichtung
- 26: Rad der Antriebsvorrichtung
- 27: Gleichrichter der Energieversorgung
- 28: Temperaturregeleinrichtung
- 29: Temperatursensor
- 30: Heizung
- 31: Lüfter
- 32: Aufbewahrungsbehälter
- 33: erste Klappe des Aufbewahrungsbehälters
- 33a: Antrieb für erste Klappe des Aufbewahrungsbehälters
- 34: zweite Klappe des Aufbewahrungsbehälters
- 34a: Antrieb für zweite Klappe des Aufbewahrungsbehälters
- 35: Greifeinrichtung des Aufbewahrungsbehälters
- 36: einzelne Aussparung an dem Gehäuse der Vorrichtung
- 37a: erste Aussparung an dem Gehäuse der Vorrichtung
- 37b: zweite Aussparung an dem Gehäuse der Vorrichtung
- 37c: dritte Aussparung an dem Gehäuse der Vorrichtung
- 38a: erste Verschlusseinrichtung an der erste Aussparung
- 38b: zweite Verschlusseinrichtung an der zweite Aussparung
- 38c: dritte Verschlusseinrichtung an der dritten Aussparung
- 39: Aufbewahrungseinheit
- 39a: erstes Fach der Aufbewahrungseinheit
- 39b: zweites Fach der Aufbewahrungseinheit
- 39c: drittes Fach der Aufbewahrungseinheit
- 40: Löscheinrichtung

## Patentansprüche

1. Vorrichtung (1) zum Aufbewahren und Versorgen einer Anzahl an Akkumulatoren (2), insbesondere als Energiespeicher für eine Werkzeugmaschine mit elektrischer Energie, **gekennzeichnet durch**
- ein Gehäuse (3) mit wenigstens einer Eingabe- und Ausgabeeinrichtung (10) zur Eingabe wenigstens eines Akkumulators (2) in die Vorrichtung (1) oder zur Ausgabe wenigstens eines Akkumulators (2) aus der Vorrichtung (1);
- eine Steuerungseinrichtung (4) mit wenigstens einer Speichereinheit (5);
- eine Kommunikationseinrichtung (6) zum Ein- und Ausgeben von Signalen;
- wenigstens eine Ladeeinrichtung (7) mit wenigstens einer Ladeeinheit (20) zum jeweiligen Versorgen eines Akkumulators (2) mit elektrischer Energie;
- eine Antriebsvorrichtung (8) zum wahlweisen und reversiblen Bewegen der wenigstens einen Ladeeinheit (20) von wenigstens einer ersten Position zu einer zweiten Position, wobei die wenigstens eine Ladeeinheit (20) in wenigstens einer Position an der Eingabe- und Ausgabeeinrichtung (10) positionierbar ist; und
- eine Energieversorgung (9) wenigstens zur Versorgung der Antriebsvorrichtung (8) sowie der Ladeeinrichtung (7) mit elektrischer Energie.

2. Vorrichtung (1) nach Anspruch 1,
**dadurch gekennzeichnet, dass** wenigstens ein Sensor (23) zum Erfassen wenigstens eines Kennwertes des wenigstens einen Akkumulators (2) enthalten ist.

3. Vorrichtung (1) nach Anspruch 1 oder 2,
**dadurch gekennzeichnet, dass** eine Temperaturregeleinrichtung (28) mit wenigstens einem Temperatursensor (29), wenigstens einer Heizung (30) und wenigstens einer Kühleinheit (31) enthalten ist.

4. Vorrichtung (1) nach wenigstens einem der vorstehenden Ansprüche,
**dadurch gekennzeichnet, dass** wenigstens ein Aufbewahrungsbehälter (32) zum Aufnehmen und Halten wenigstens eines Akkumulators (2) und eine Greifeinrichtung (35) zum Einführen des wenigstens einen Akkumulators (2) in den wenigstens einen Aufbewahrungsbehälter (32) enthalten ist.

5. Vorrichtung (1) nach Anspruch 4,
**dadurch gekennzeichnet, dass** der wenigstens eine Aufbewahrungsbehälter (32) eine Löscheinrichtung (40) enthält.

6. Vorrichtung (1) nach wenigstens einem der vorstehenden Ansprüche,
**dadurch gekennzeichnet, dass** die Eingabe- und Ausgabeeinrichtung (10) wenigstens eine Verschlusseinrichtung (11, 15, 38a, 38b, 38c) zum wahlweisen Verriegeln der Eingabe- und Ausgabeeinrichtung (10) enthält.

7. Verfahren zum Steuern und Regeln einer Vorrichtung (1) nach wenigstens einem der Ansprüche 1 bis 6, enthaltend wenigstens die Verfahrensschritte:
- Verbinden wenigstens eines Akkumulators (2) mit einer Ladeeinrichtung (7) in einer ersten Position;
- Erfassen wenigstens eines Kennwertes des wenigstens einen Akkumulators (2) durch wenigstens einen Sensor (23);
- Versorgen des wenigstens einen Akkumulators (2) durch die Ladeeinrichtung (7) mit elektrischer Energie in Abhängigkeit wenigstens eines ersten erfassten Kennwertes; und
- Bewegen des Akkumulators (2) von der ersten Position in ersten Position in eine zweite Position in Abhängigkeit wenigstens eines zweiten erfassten Kennwertes.

8. Verfahren nach Anspruch 7,
**gekennzeichnet durch** den Verfahrensschritt:
- Einführen eines Akkumulators (2) in den wenigstens einen Aufbewahrungsbehälter (32), wenn wenigstens ein erfasster Kennwert einem vorbestimmten Schwellwert entspricht oder übersteigt.
